# EUROPÄISCHE PATENTSCHRIFT

(11) **EP 0 280 305 B1**
(45) Veröffentlichungstag und Bekanntmachung des Hinweises auf die Patenterteilung: **07.12.1994**
(21) Anmeldenummer: 88102836.9
(22) Anmeldetag: 25.02.1988
(51) Int. Cl.: G02B 6/42

(54) **Optoelektronisches Koppelelement und Verfahren zu dessen Herstellung**
Optoelectronic couple element and method of producing it
Elément de couplage opto-électronique et son procédé de fabrication

(30) Priorität: 25.02.1987 DE 3706103
(43) Veröffentlichungstag der Anmeldung: 31.08.1988
(73) Patentinhaber: SIEMENS AKTIENGESELLSCHAFT, 80333 München (DE)
(72) Erfinder: Althaus, Hans-L., Dr.rer.nat., D-8411 Lappersdorf (DE); Kuhlmann, Werner, Dr. Dipl.-Phys., D-8000 München 90 (DE); Späth, Werner, Dipl.-Phys., D-8150 Holzkirchen (DE); Birkmann, Rolf, D-8411 Laaber (DE); Klos, Waltraud, Dipl.-Ing., D-8400 Regensburg (DE); Schubert, Axel, Dipl.-Phys., D-8000 München 90 (DE); Waitl, Günter, D-8400 Regensburg (DE)

(56) Entgegenhaltungen:
- EP-A- 0 121 402
- FR-A- 2 440 563
- GB-A- 2 097 550
- PATENT ABSTRACTS OF JAPAN, Band 8, Nr. 217 (E-270)[1654], 4. Oktober 1984 ; & JP-A-59 101 881

## Beschreibung

Die Erfindung bezieht sich auf ein optoelektronisches Koppelelement mit einem Lichtwellenleiter und einer Mikrolinse als optische Koppelmedien, die auf einem Trägerplättchen gesondert zu einem lichtemittierenden und/oder einem lichtdetektierenden Halbleiterbauelement in definierter räumlicher Relation zueinander angeordnet und fixiert sind.

Ein derartiges Bauelement und ein Verfahren zu dessen Herstellung sowie eine Vorrichtung zum Durchführen des Verfahrens gehen aus der EP-A-0 204 224 als bekannt hervor. Bei diesem Bauelement kann auch eine Linse über einen Körper aus Halbleitermaterial indirekt auf einem Träger fixiert sein.

In Lichtwellenleiter-Sender- bzw. Empfängersystemen werden häufig optische Linsen, beispielsweise Kugellinsen zur Ein- bzw. Auskopplung des vom aktiven Halbleiterbauelement herrührenden bzw. zu empfangenden Lichtes in einen bzw. aus einem Lichtwellenleiter, beispielsweise eine(r) Glasfaser, verwendet. Damit stellen sich insbesondere folgende Probleme:
- Halterung der Linse in exakt definierter Position zwischen aktivem Halbleiterbauelement und Lichtwellenleiter bei Toleranzen im 1µm-Bereich,
- leichte Justierung der Linse auf optimale Ein- bzw. Auskopplung,
- keine Beeinträchtigung des aktiven Halbleiterchips durch die Linsenhalterung, z.B. durch mechanische Verspannung,
- trotz der Kleinheit der Komponenten (Linsendurchmesser z.B. 100µm bis 500µm) billige Herstellung in großen Stückzahlen.

Bei optoelektronischen Koppelelementen wurden oder werden bisher folgende Linsenbefestigungsmethoden angewendet:
a) Eine optische Linse wird direkt auf einem Halbleiterchip aufgewachsen,
b) eine optische Linse wird direkt auf einen Halbleiterchip geklebt,
c) ein Halbleiterchip ist in einem Gehäuse mit Linsenkappe montiert.

Der Nachteil dieser Methoden besteht hauptsächlich darin, daß große Toleranzen in Kauf genommen werden müssen.

Der Erfindung liegt die Aufgabe zugrunde, diese Nachteile zu vermeiden und ein optoelektronisches Koppelelement mit einem Lichtwellenleiter und einer Mikrolinse als Koppelmedium zu schaffen, bei dem die Mikrolinse in exakt definierter Position zwischen dem Lichtwellenleiter und dem aktiven (lichtemittierenden und/oder lichtdetektierenden) Halbleiterbauelement gehaltert ist. Außerdem soll eine leichte Justierung der Mikrolinse auf optimale Lichtkopplung zwischen aktivem Halbleiterbauelement und Lichtwellenleiter ermöglicht werden. Zudem soll eine Beeinträchtigung des aktiven Halbleiterchips, z.B. durch Verspannung vermieden werden. Schließlich soll das Koppelelement trotz der Kleinheit der Komponenten in großen Stückzahlen billig herstellbar sein.

Diese Aufgabe wird erfindungsgemäß durch ein optoelektronisches Koppelelement mit den Merkmalen des Anspruchs 1 gelöst.

Vorteilhafte Ausgestaltungen bzw. Weiterbildungen der Erfindung sind Gegenstand zusätzlicher Ansprüche.

Die mit der Erfindung erzielten Vorteile bestehen neben der Beseitigung der aufgezeigten Nachteile insbesondere darin, daß eine Vielzahl von Halbleiterchips mit vorzugsweise angeglaster Kugellinse auf einem sogenannten Wafer gleichzeitig hergestellt werden können. Dabei können sowohl das Ätzen der Träger als auch bei der Verwendung von Glaslot als Verbindungsmedium das Beglasen des Plättchens (Scheibe), Einfüllen und Anschmelzen der optischen Linsen in Gestalt von Kugeln sowie eine evtl. optische Vergütung der Linsenoberfläche im Scheibenverband erfolgen. Im Falle der bevorzugten Verwendung von Glaslot als Verbindungsmedium sind alle Verbindungen hochtemperaturfest z.B. bis 400°C. Zudem brauchen bei dieser Ausführung keine organischen Materialien verwendet werden. Von weiterem Vorteil ist, daß bei der Ausführungsform mit einer Kugellinse und einem Siliciumträgerplättchen diese Anordnung beispielsweise durch Montagepinzetten leicht gehandhabt werden kann.

Gemäß einer vorteilhaften Ausgestaltung der Erfindung besteht das weitere Trägerplättchen aus einem Halbleitermaterial, aus Silicium, in das das Loch definierter Größe, die von der Linsengröße und dem Berührungspunkt Linse-Träger abhängig ist, geätzt ist. In dem Loch ist die Linse, vorzugsweise eine Saphir-, Spinell- oder Glaslinse, vorzugsweise mittels Glaslot befestigt. Es kann zweckmäßig sein, die Linse optisch zu vergüten. Außerdem weist der Linsenträger zweckmäßig auf der Unterseite eine Metallisierung auf, die zum Befestigen des Trägers auf einem Isolator- bzw. Rahmenteil in einem Lötprozeß benötigt wird.

Die Justage und Befestigung des Trägerplättchens mit der Mikrolinse über einem Halbleiterchip wird vorzugsweise auf folgende Weise vorgenommen: Ein strukturiert metallisierter Isolator, der an einem sogenannten Leadframe aus schlecht wärmeleitendem Material fixiert ist, dient als Chipträger. Nach Inbetriebnahme des Chips, die am Band erfolgt, wird dieser in x,y-Richtung optimal zu einem lichtemittierenden bzw. zu einem lichtdetektierenden oder einem diesen zugeordneten Lichtwellenleiter, z.B. einer Glasfaser, justiert. Die Justage und Befestigung des Linsenträgerplättchens erfolgt analog zu der in der eingangs genannten EP-A-0 204 221 beschriebenen Lichtwellenleitermontage mittels zweier Elektroden, die in Zangenform ausgebildet und an einem x,y,z-Manipulator befestigt sind. Die Mikrolinse kann dabei im vorliegenden Fall auf ein zur nachfolgenden optischen Anordnung, wie einer Photodiode, einer Glasfaser, einer Glasfaser mit Mikrolinse, einer Infrarot-Lumineszenzdiode (IRED), einer Laserdiode oder dgl., optimales Ausgangssignal justiert werden. Das zur Befestigung des Linsenträgers notwendige Lot kann durch Vorbeloten des seitlich am Isolator (Keramik) überstehenden und zur Erhöhung des Wärmewiderstandes als Ärmchen ausgebildeten Bandes angeboten werden. Die Linsenjustage geschieht im flüssig aufgeschmolzenen Lot. Der Linsenträger wird bei Abschluß des Justiervorganges durch Abkühlen und Erstarren des Lotes fixiert.

Anhand von in den Figuren der Zeichnung rein schematisch dargestellten Koppelelemente wird die Erfindung weiter erläutert. Teile, die nicht unbedingt zum Verständnis der Erfindung beitragen, sind in den Figuren unbezeichnet oder weggelassen. Es zeigen:
- Fig. 1: ein erfindungsgemäßes optoelektronisches Koppelelement im Schnitt,
- Fig. 2: ein optoelektronisches Koppelelement im Schnitt und
- Fig. 3: eine perspektivische Ansicht mehrerer optoelektronischer Koppelelemente im Scheibenverband.

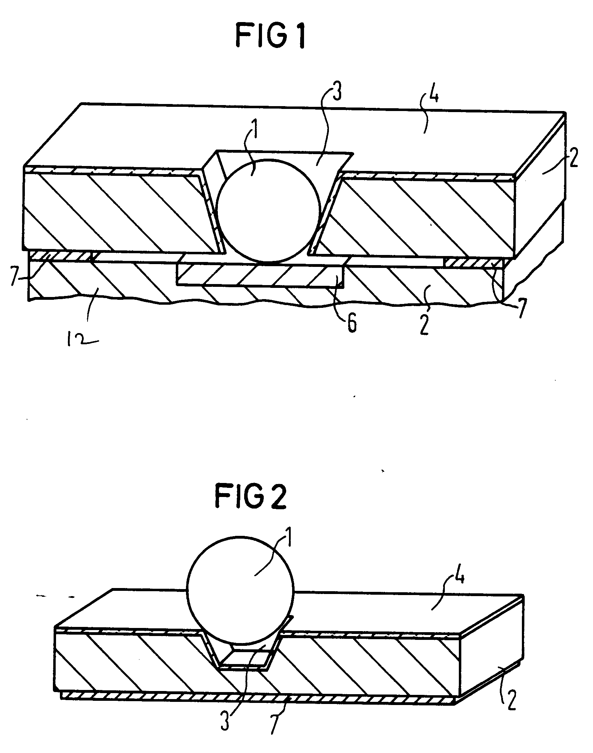

Das in Fig. 1 dargestellte erfindungsgemaße optoelektronische Koppelelement besteht im wesentlichen aus einem Trägerplättchen 2 aus Silicium, durch das eine Vertiefung 3 in Gestalt eines pyramidenstumpfförmigen Loches anisotrop durchgeätzt ist. In die Vertiefung 3 ist die Mikrolinse 1, in diesem Beispiel eine Saphirkugel mit einem Durchmesser von ungefähr 300µm eingefügt. Zur Befestigung der Mikrolinse 1 in der Vertiefung 3 ist eine Glaslotschicht 4 von ungefähr 8µm Dicke vorgesehen, die in die Vertiefung 3 hineinreicht und das Trägerplättchen 2 zumindest im Bereich der Vertiefung 3 mit bedeckt. Die Mikrolinse 1 ist in der Vertiefung 3 mittels der Glaslotschicht 4 direkt am Trägerplättchen 2 befestigt. Das Trägerplättchen 2 ist an seiner Unterseite zumindest im Randbereich mit einer Metallisierung 7, beispielsweise einer TiPtAu-Metallisierung zum Verlöten mit einem nicht dargestellten metallisierten Isolator (Keramik)-Trägerteil versehen.

Das lichtemittierende oder lichtdetektierende aktive Halbleiterbauelement 6, beispielsweise als Sender-Chip eine Infrarot-Lumineszenzdiode (IRED) für 1,3µm Wellenlänge und einem Leuchtfleck von z.B. 20µm Durchmesser, befindet sich in 10µm Abstand unterhalb der Mikrolinse (Kugel) 1 auf dem weiteren Trägerplättchen 2 und der nicht dargestellte Lichtwellenleiter, beispielsweise eine Glasfaser, in einem etwas größeren Abstand oberhalb der Mikrolinse 1.

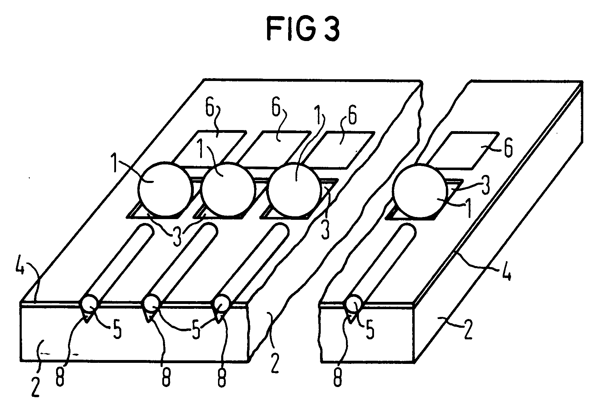

Bei dem in Fig. 2 dargestellten optoelektronischen Koppelelement, das nicht die Erfindung darstellt ist die Vertiefung 3 in das vorzugsweise aus Silicium bestehende Trägerplättchen 2 in Gestalt eines pyramidenstumpfförmigen Sackloches anisotrop eingeätzt. Das Trägerplättchen 2 ist an seiner mit der Vertiefung 3 versehenen Oberseite mit einer ungefähr 8µm dicken Glaslotschicht bedeckt, die als Verbindungsmedium 4 zum direkten Befestigen der Mikrolinse 1, in diesem Ausführungsbeispiel einer Saphirkugel, am Trägerplättchen 2 dient. Auf der Unterseite des Trägerplättchens 2 ist eine Metallisierung 7 vorgesehen, beispielsweise eine TiPtAu-Metallisierung, zum Festlöten des Trägerplättchens 2 beispielsweise auf einem nicht dargestellten strukturiert metallisierten Isolator. Das nicht dargestellte aktive (lichtemittierende oder lichtdetektierende) Halbleiterbauelement 6 bzw. der nicht dargestellte Lichtwellenleiter (z.B. Glasfaser) können sich vor bzw. hinter der Mikrolinse (Kugel) 1 befinden. Möglich ist auch eine direkte Montage von Sender- bzw. Empfänger-Chip und Lichtwellenleiter (z.B. Glasfaser) auf dem Trägerplättchen (Silicium-Chip).

Sowohl das Ausführungsbeispiel nach Fig. 1 als auch das nach Fig. 2 lassen sich als Mikrolinsenarray ausführen bzw. im Scheibenverband herstellen, wenn z.B. eine Vielzahl von Lichtsendern - und/oder Empfängern gleichzeitig ein- bzw. ausgekoppelt werden. Eine solche Kopplung läßt sich als lösbare Verbindung aus führen. Für die Justage und Fixierung der Lichtwellenleiter, beispielsweise der Glasfasern können vor bzw. hinter den Mikrolinsen Nuten eingeätzt sein. In Fig. 3 ist ein solches Ausführungsbeispiel gezeigt.

Bei dem in Fig. 3 dargestellten optoelektronischen Koppelelement, das nicht die Erfindung darstellt, sind mehrere in Abstand nebeneinander liegende Vertiefungen 3 in ein Trägerplättchen 2, vorzugsweise ein Siliciumplättchen, in Gestalt von pyramidenstumpfförmigen Sacklöchern anisotrop eingeätzt. Das Einätzen der Nuten 8 zur Aufnahme der Lichtwellenleiter 5 wird zweckmäßig gleichzeitig vorgenommen. In die Vertiefungen 3 sind die Mikrolinsen 1, in diesem Beispiel Saphirkugeln eingefügt. Zum direkten Befestigen der Mikrolinsen 1 in den Vertiefungen 3 sowie der Glasfasern als Lichtwellenleiter 5 in den Nuten 8 im Trägerplättchen 2 sind in diesem Ausführungsbeispiel die Oberfläche des Trägerplättchens 2 einschließlich der Oberflächen der Vertiefungen 3 sowie der Nuten 8 mit einer Glaslotschicht als Verbindungsmedium 4 bedeckt. Die mit den Glasfasern als Lichtwellenleiter 5 versehenen Nuten 8 sind in diesem Beispiel jeweils vor den Vertiefungen 3 mit den Mikrolinsen (Saphirkugeln) 1 im Trägerplättchen (Si-Chip) 2 angeordnet. Hinter den jeweiligen Vertiefungen 3 sind als aktive Halbleiterbauelemente 6 lichtemittierende oder lichtdetektierende Halbleiterbauelemente bzw. Sender- oder Empfänger-Chips vorgesehen.

## Patentansprüche

1. Optoelektronisches Koppelelement bestehend aus einem Lichtwellenleiter, einem Trägerplättchen (12) mit einem lichtemittierenden oder lichtdetektierenden aktiven Halbleiterbauelement (6), einer Kugellinse (1) zum optischen Koppeln des Lichtwellenleiters mit dem aktiven Halbleiterbauelement (6) und einem weiteren Trägerplättchen (2) aus Silizium, in das zur Halterung der Kugellinse (1) eine Vertiefung (3) in Gestalt eines pyramidenstumpfförmigen Sack- oder Durchgangsloches anisotrop geätzt ist, dessen Abmessungen von der Kugellinsengröße und den Berührungspunkten zwischen der Kugellinse und dem weiteren Trägerplättchen bestimmt sind, und in dem die Kugellinse (1) mittels einer Glaslotschicht (4) befestigt ist, wobei die beiden Trägerplättchen (2,12) und damit die Kugellinse (1) und das aktive Halbleiterbauelement (6) in definierter räumlicher Relation zueinander angeordnet und fixiert sind.

2. Optoelektronisches Koppelelement nach Anspruch 1, wobei die Kugellinse (1) eine Glas-, Spinell- oder Saphirlinse ist.

3. Optoelektronisches Koppelelement nach Anspruch 1 oder 2, wobei die Oberfläche der Kugellinse (1) optisch vergütet ist.

4. Verfahren zum Herstellen eines optoelektronischen Koppelelements nach einem der Ansprüche 1 bis 4, **dadurch** **gekennzeichnet**, daß in ein Trägerplättchen (2) aus Silizium eine pyramidenstumpfförmige Vertiefung (3) anisotrop ein- oder durchgeätzt wird, und daß in die Vertiefung (3) eine Kugellinse (1) aus Saphir, Spinell oder Glas eingefügt und mittels einer Glaslotschicht (4) direkt an dem Trägerplättchen (2) befestigt wird.

5. Verfahren nach Anspruch 4, **dadurch gekennzeichnet**, daß im Scheibenverband eine Vielzahl von Trägerplättchen (2) gleichzeitig mit pyramidenstumpfförmigen Vertiefungen (3) durch anisotropes Ein- oder Durchätzen versehen wird, daß dann die Trägerplättchen (2) mit ihren Vertiefungen (3) mit einer Glaslotschicht (4) überzogen werden, und daß anschließend die Kugellinsen (1) in die jeweiligen Vertiefungen (3) eingefügt und angeschmolzen werden.

6. Verfahren nach Anspruch 4 oder 5, **dadurch** **gekennzeichnet**, daß die Oberflächen der Kugellinsen (1) im Scheibenverband auf den Trägerplättchen (2) optisch vergütet werden.

## Claims

1. Optoelectronic coupling element comprising a light waveguide, a carrier chip (12) having a light-emitting or light-detecting active semiconductor component (6), a spherical lens (1) for coupling the light waveguide optically to the active semiconductor element (6) and a further carrier chip (2) made of silicon, into which a recess (3) in the form of a truncated pyramid-shaped blind hole or through hole is anisotropically etched for the purpose of holding the spherical lens (1), of which the dimensions are determined by the size of the spherical lens and the contact points between the spherical lens and the further carrier chip, and in which the spherical lens (1) is fastened by means of a glass-solder layer (4), the two carrier chips (2,12) and thus the spherical lens (1) and the active semiconductor component (6) being arranged and fixed in a defined spatial relation to each other.

2. Optoelectronic coupling element according to Claim 1, in which the spherical lens is a glass, spinel or sapphire lens.

3. Optoelectronic coupling element according to Claim 1 or 2, in which the surface of the spherical lens is optically bloomed.

4. Method for the production of an optoelectronic coupling element according to one of Claims 1 to 3, characterized in that a truncated pyramid-shaped recess (3) is anisotropically etched into or through a carrier chip (2) made of silicon, and in that a spherical lens (1) made of sapphire, spinel or glass is inserted into the recess (3) and fastened directly on the carrier chip (2) by means of a glass-solder layer (4).

5. Method according to Claim 4, characterized in that, in the chip array, a multiplicity of carrier chips (2) is simultaneously provided with truncated pyramid-shaped recesses (3) by means of anisotropic etching in or etching through, in that the carrier chips (2) with their recesses (3) are then covered with a glass-solder layer (4), and in that finally the spherical lenses (1) are inserted into the respective recesses (3) and fused on.

6. Method according to Claim 4 or 5, characterized in that the surfaces of the spherical lenses (1) in the chip array on the carrier chips (2) are optically bloomed.

## Revendications

1. Élément de couplage optoélectronique constitué par un guide d'ondes lumineuses, une plaquette de support (12) comportant un composant à semiconducteurs actif (6) photoémissif ou détecteur de lumière, une lentille sphérique (1) servant à coupler optiquement le guide d'ondes lumineuses au composant à semiconducteurs actif (6) et à une autre plaquette de support (2) en silicium, dans laquelle pour retenir la lentille sphérique (1) est formé par corrosion anisotrope un renfoncement (3) possédant la forme d'un trou borgne ou d'un trou de perçage en forme de tronc de pyramide, dont les dimensions sont déterminées par la taille de la lentille sphérique et par les points de contact entre la lentille sphérique et l'autre plaquette de support, et dans lequel la lentille sphérique (1) est fixée au moyen d'une couche de verre pour soudure (4), les deux plaquettes de support (2,12) et par conséquent la lentille sphérique (1) et le composant à semiconducteurs actif (6) étant disposés et fixés l'un par rapport à l'autre dans une relation spatiale définie.

2. Élément de couplage optoélectronique suivant la revendication 1, dans lequel la lentille sphérique (1) est une lentille en verre, en spinelle ou en saphir.

3. Élément de couplage optoélectronique suivant la revendication 1 ou 2, dans lequel la surface de la lentille sphérique (1) est traitée optiquement selon un traitement antireflet.

4. Procédé pour fabriquer un élément de couplage optoélectronique suivant l'une des revendications 1 à 3, caractérisé par le fait qu'on ménage de façon anisotrope par corrosion un renfoncement en forme de tronc de pyramide (3) dans une plaquette de support (2) en silicium, qu'on insère une lentille sphérique (1) en saphir, en spinelle ou en verre dans le renfoncement (3) et qu'on la fixe directement au moyen d'une couche de verre pour soudure (4) directement à la plaquette de support (2).

5. Procédé suivant la revendication 4, caractérisé par le fait que dans l'ensemble mère de pastilles on aménage simultanément, dans une multiplicité de plaquettes de support (2), par corrosion anisotrope pénétrante ou traversante, des renfoncements en forme de troncs de pyramide (3), qu'ensuite on recouvre les plaquettes de support (2) et leurs renfoncements (3) d'une couche d'un verre pour soudure (4) et qu'ensuite on insère et on fixe par fusion les lentilles sphériques (1) dans les renfoncements respectifs (3).

6. Procédé suivant la revendication 4 ou 5, caractérisé par le fait qu'on applique un traitement optique antireflet aux surfaces des lentilles sphériques (1) dans l'ensemble mère de pastilles sur les plaquettes de support (2).
